(19) **Europäisches Patentamt**
**European Patent Office**
**Office européen des brevets**

(11) **EP 2 050 187 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(51) Int Cl.:
*H02P 21/00* (2016.01)  *H02P 21/05* (2006.01)
*H02P 21/14* (2016.01)

(21) Anmeldenummer: **07786118.5**

(22) Anmeldetag: **17.07.2007**

(86) Internationale Anmeldenummer:
**PCT/EP2007/006318**

(87) Internationale Veröffentlichungsnummer:
**WO 2008/014881 (07.02.2008 Gazette 2008/06)**

(54) **ANTRIEB UND VERFAHREN**

DRIVE AND METHOD

ENTRAINEMENT ET PROCEDE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.08.2006 DE 102006036170**
**13.06.2007 DE 102007027827**

(43) Veröffentlichungstag der Anmeldung:
**22.04.2009 Patentblatt 2009/17**

(73) Patentinhaber: **SEW-EURODRIVE GmbH & Co. KG**
**76646 Bruchsal (DE)**

(72) Erfinder:
• **HAMMEL, Wolfgang**
**76646 Bruchsal (DE)**
• **SCHUSTER, Thomas**
**73113 Ottenbach (DE)**

(56) Entgegenhaltungen:
**WO-A-2005/018086   US-A1- 2004 001 291
US-B1- 6 359 416**

• **LORENZ R D ET AL: "MOTION CONTROL WITH INDUCTION MOTORS" PROCEEDINGS OF THE IEEE, IEEE. NEW YORK, US, Bd. 82, Nr. 8, 1. August 1994 (1994-08-01), Seiten 1215-1240, XP000468125 ISSN: 0018-9219**

EP 2 050 187 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Antrieb und ein Verfahren.

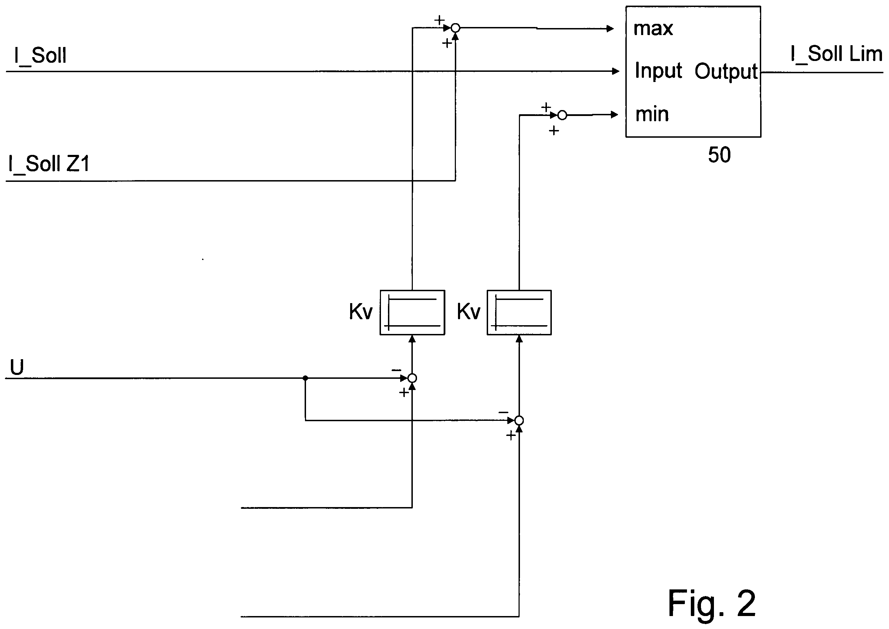

Aus der EP 0 179 356 ist ein Verfahren zur Regelung einer Drehfeldmaschine bekannt. Dabei wird gemäß dortiger Figur 2 der Strom und die Spannung am Motor erfasst. Dabei werden aus einer Reglerstruktur, die einer Modellbildung der Maschine entspricht, Komponenten des Istwerts des Flusses gebildet. Diese werden einem Flussregler zugeführt, dessen Ausgang die Schaltzustände des die Maschine versorgenden Wechselrichters als Stellgrößen beeinflusst.

Aus der DE 1 941 312 ist ein Verfahren zu Steuerung einer Asynchronmaschine bekannt, bei der Hallsensoren 3 verwendet werden.

Aus der DE 195 32 477 A1 ist ein Verfahren zum Anlassen einer Asynchronmaschine bekannt, bei dem zum Anlassen der Drehmomentsollwert Null vorgegeben wird.

Aus der DE 199 752 C1 ist ein Verfahren zum Zuschalten eines Umrichters an einen Asynchronmotor bekannt.

Aus der WO 2005/018086 A ist als nächstliegender Stand der Technik ein Verfahren zur gesteuerten Einprägung eines Ständerstrom- und eines Drehmoment-Sollwerts für eine stromrichtergespeiste Drehfeldmaschine bekannt.

Aus der US 6 359 416 B1 ist ein adaptives prädiktives synchrones Stromreglerverfahren bekannt.

Aus der Veröffentlichung NESHEVA D ET AL: "BIAS _ENHANCED CONDUCTANCE IN HYDROGENATED AMORPHOUS SILICON FILMS" Philosophical Magazine B; Bd. 63, Nr. 5, 1. Mai 1991, Seiten 1139 - 1148, XP 000568125 ISSN: 0141-8637 ist eine Beobachtung von Metastabilität in hydriertem amorphem Silizium bekannt.

Aus der US 2004/001291 A1 ist ein Verfahren zur Bestimmung einer Driftbedingung für eine Winkelgeschwindigkeitsregelung bei einem Synchronmotor bekannt.

Der Erfindung liegt daher die Aufgabe zugrunde, die Regelungseigenschaften eines elektrischen Antriebs zu verbessern.

Erfindungsgemäß wird die Aufgabe bei dem Antrieb nach den in Anspruch 1 und bei dem Verfahren nach den in Anspruch 15 angegebenen Merkmalen gelöst.

Wesentliche Merkmale der Erfindung bei dem Antrieb sind, dass er einen Elektromotor, der von einem Umrichter gespeist ist, umfasst,
wobei der Umrichter eine zeitdiskrete Regelstruktur umfasst, die den Statorstrom des Elektromotors mittels Stellen der am Motor anliegenden Spannung regelt,
wobei der Strom des Motors zeitdiskret erfasst wird,
wobei die Regelstruktur einen Regler umfasst, dessen Istwert eine erste Stromkomponente des Stromes ist,
wobei der Sollwertvorgabe des Reglers zumindest ein Sollwertbegrenzer vorgeschaltet ist.

Von Vorteil ist dabei, dass der Sollwertbegrenzer derart ausführbar ist, dass die Stellgrenze des Umrichters, also beispielhaft die durch die Zwischenkreisspannung bedingte Spannungsstellgrenze, nicht überschritten wird. Außerdem ist er derart ausführbar, dass keine wesentlichen Rückkopplungen und somit auch keine Schwingungsneigung besteht. Darüber hinaus ist trotzdem ein schnellstmögliches Ausregeln von Sollwertveränderungen ermöglicht und die Regelungseigenschaften des elektrischen Antriebs sind somit verbessert. Insbesondere ist die Regelstruktur derart ausführbar, dass der Istwert derart verläuft, dass er nach jeweils genau einem Zeitschritt, also Zeitraster, den am eigentlichen Regler anliegenden Sollwert erreicht, wobei dieser Sollwert jedoch aus dem Ausgangssignal des Sollwertbegrenzers erzeugbar ist.

Bei einer vorteilhaften Ausgestaltung ist zwischen der Sollwertvorgabe des Reglers und dem Ausgangswert der Sollwertbegrenzung ein zeitliches Verzögerungsglied angeordnet, insbesondere zur Verzögerung um einen einzigen Zeitschritt. Von Vorteil ist dabei, dass dem Regler eine Vorsteuerung beiordenbar ist, die im Wesentlichen die Änderungen des Sollwertes ausregelt. Somit muss der Regler nur noch unwesentliche Abweichungen ausregeln.

Bei einer vorteilhaften Ausgestaltung ist dem Regler eine Vorsteuerung zugeordnet, die dem Ausgangswert des Regler eine zur zeitlichen Änderung der Sollwertvorgabe proportionale Größe aufaddiert. Von Vorteil ist dabei, dass ein Regelstrecke mit im Wesentlichen integrierendem Verhalten schon durch die Vorsteuerung gut beherrschbar ist, so dass der Regler nur Abweichungen und Störgrößen ausgleichen muss.

Bei einer vorteilhaften Ausgestaltung benötigt die Sollwertbegrenzung als Eingangsgröße zumindest den nichtverzögerten Sollwert, den zeitlich verzögerten Sollwert und den Ausgangswert des Reglers. Von Vorteil ist dabei, dass die Sollwertbegrenzung derart ausführbar ist, dass die Stellgrenze des Umrichters berücksichtigbar ist und ebenso zumindest wesentliche Anteile der Übertragungsfunktion der Regelstrecke, umfassend Motor.

Bei einer vorteilhaften Ausgestaltung ist der Regler ein Dead-Beat-Regler, insbesondere ein auf den in der Regelstrecke angeordneten Motor angepassten. Von Vorteil ist dabei, dass der Istwert am Reglereingang den angelegten Sollwert in schon einem einzigen Zeitschritt, also Zeitraster erreichen kann.

Bei einer vorteilhaften Ausgestaltung ist der Regler ein linearer Regler, wie P-Regler, ein PI-Regler oder ein PID-Regler, insbesondere mit Vorsteuerung. Von Vorteil ist dabei, dass einfache unaufwendige Reglerstrukturen verwendbar sind.

Bei einer vorteilhaften Ausgestaltung werden aus dem erfassten Strom die Stromkomponenten in einem Koordinatensystem bestimmt. Von Vorteil ist dabei, dass ein angepasstes Koordinatensystem verwendbar ist, insbesondere ein mitdrehendes, so dass der Rechenaufwand gering ist.

Bei einer vorteilhaften Ausgestaltung umfasst der Umrichter für jede Stromkomponente eine Regelstruktur, die der Regelstruktur für die erste Stromkomponente gleicht. Von Vorteil ist dabei, dass ein Überschwingen in allen Stromkomponenten vermeidbar ist.

Bei einer vorteilhaften Ausgestaltung ist die Vorsteuerung als Dead-Beat-Steuerung ausgeführt, weist also das zum in der Regelstrecke angeordneten Motor ein inverses Verhalten auf, insbesondere wobei die Stellgrenze des Umrichters dabei nicht berücksichtigt wird. Von Vorteil ist dabei, dass die Vorsteuerung derartig vorsehbar ist, dass die Vorsteuerung schon in einem Zeitschritt die wesentlichen Abweichungen der Istgröße von der Sollwertgröße verschwinden lassen kann.

Bei einer vorteilhaften Ausgestaltung begrenzt der Sollwertbegrenzer SB den Sollwert derart, dass die Spannungsstellgrenze nicht überschritten wird, insbesondere wobei dies derart geschieht, dass keine anderen Nachteile, wie Instabilitäten des Regelkreises durch zusätzliche Rückkopplungen, entstehen. Von Vorteil ist dabei, dass ein Schwingverhalten nicht auftritt und trotzdem der Sollwert schnellstmöglich und ohne Überschwingen erreichbar ist.

Bei einer vorteilhaften Ausgestaltung ist der Sollwertbegrenzer derart vorgesehen, dass die Begrenzung auf den Sollwert nur dann wirkt, wenn die Ausgangsgröße, also der begrenzte Sollwert I_Soll, in Richtung des unbegrenzten Sollwertes läuft. Von Vorteil ist dabei, dass Rückkopplungen und somit auch Schwingverhalten unterdrückt werden.

Bei einer vorteilhaften Ausgestaltung wird die Differenz zwischen der Stellgröße U und den Stellgrenzen U_max und U_min des Umrichters bestimmt, wird mit einem Faktor 1/K multipliziert und wird auf den zeitlich verzögerten, also zeitlich früheren Sollwert I_SollZ1, aufsummiert, wobei diese Summe als maximaler beziehungsweise minimaler Wert (max, min) einem Begrenzer 50 zugeführt wird als auf den zeitlich nicht-verzögerten Sollwert I Soll wirksam werdenden Begrenzungswert. Von Vorteil ist dabei, dass der Sollwert schnellstmöglich und ohne Überschwingen erreichbar ist.

Bei einer vorteilhaften Ausgestaltung umfasst der Begrenzer ein Verzögerungsglied, das seinen Ausgangswert um mindestens einen Zeitschritt, also ein Zeitraster, verzögert und zur Größenbestimmung innerhalb des Begrenzers verwendet. Von Vorteil ist dabei, dass Rückkopplungen und Schwingverhalten unterdrückbar sind.

Bei einer vorteilhaften Ausgestaltung umfasst der Begrenzer Mittel zur Unterdrückung von Rückkopplungen. Von Vorteil ist dabei, dass das Schwingverhalten reduziert wird.

Bei einer vorteilhaften Ausgestaltung weist der Begrenzer als Eingangswerte den maximalen und minimalen Wert (max, min) sowie den zeitlich nicht-verzögerten Sollwert I Soll auf,
wobei der kleinere Wert aus max und input bestimmt wird, dieser verglichen wird mit dem zeitlich verzögerten Ausgangswert des Begrenzers und davon der größere Wert als obere Grenze des auf den input wirkenden Begrenzergliedes wirksam wird,
wobei der größere Wert aus min und input bestimmt wird, dieser verglichen wird mit dem zeitlich verzögerten Ausgangswert des Begrenzers und davon der kleinere Wert als untere Grenze des auf den input wirkenden Begrenzergliedes wirksam wird. Von Vorteil ist dabei, dass die Begrenzungswerte abhängig sind von der Reglerausgangsgröße und somit Überschwingungen verhinderbar sind.

Bei einer vorteilhaften Ausgestaltung beträgt

die obere Grenze des Begrenzers 50 $i_{soll\,max,n} = i_{soll,n-1} + \dfrac{1}{K_v} \cdot \left(U_{max} - u_{r,n}\right)$, wobei n die Zeitschritte nummeriert,

($U_{max}$) die Spannungsstellgrenze ist, ($u_{r,n}$) der Wert der Reglerausgangsgröße U ist, K den gleichen Wert hat wie bei der Vorsteuerung V. Von Vorteil ist dabei, dass Parameter der Regelstrecke, wie K, und die Stellgrenze U_max derart berücksichtigbar sind, dass ein Überschwingen unterdrückbar ist.

Wichtige Merkmale der Erfindung bei dem Verfahren sind, dass es zur Regelung des Motorstromes bei einem von einem Umrichter gespeisten Elektromotor vorgesehen ist,
wobei das Verfahren zeitdiskret ausgeführt wird und der Statorstrom des Motors zeitdiskret erfasst wird,
wobei der Statorstrom des Elektromotors geregelt wird,

wobei der Istwert einer ersten Stromkomponente des Stromes auf eine Sollwertvorgabe hin geregelt wird,
wobei die Sollwertvorgabe Ausgang eines Sollwertbegrenzers ist,
wobei die Stellgröße des Reglers die am Motor anliegenden Spannung ist.

Von Vorteil ist dabei, dass der Sollwertbegrenzer derart ausführbar ist, dass er Parameter umfasst, die mit der Regelstrecke und der Stellgrenze zusammenhängen. Somit ist ein Überschwingen verhinderbar.

Weitere Vorteile ergeben sich aus den Unteransprüchen.

Die Erfindung wird nun anhand von Abbildungen näher erläutert:

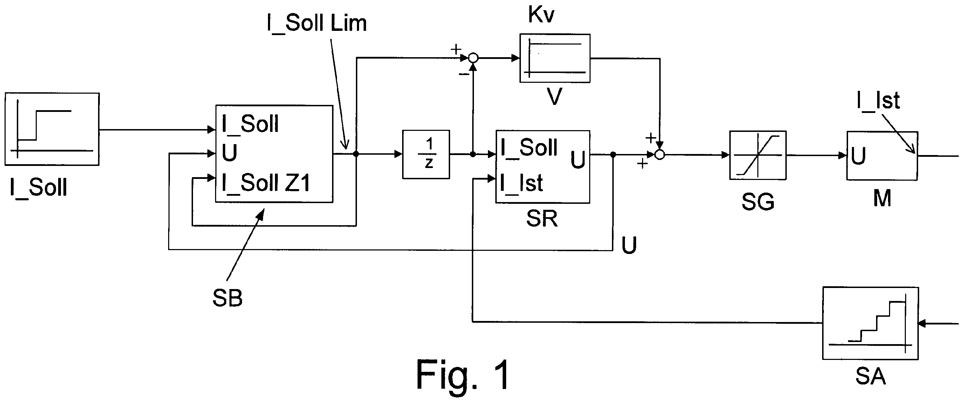

In der Figur 1 ist eine erfindungsgemäße schematische Darstellung der Reglerstruktur gezeigt. Dabei wird an der elektrischen Maschine, beispielhaft ein Elektromotor M, der Stromistwert I_Ist erfasst. Diese Erfassung erfolgt mit der Stromabtastung SA zeitdiskret, also zu jedem Zeitschritt des zeitdiskreten Reglers einmal.

Da der Strom der Maschine eine mehrdimensionale Größe ist, wenn die Maschine eine dreiphasige Versorgung aufweist, ist der Strom als Vektor darzustellen.

Dieser Vektor ist in einem Koordinatensystem darstellbar, wie Flusskoordinatensystem, Rotorkoordinatensystem oder dergleichen.

Der Stromistwert I_IST der Figuren ist dabei als Stromkomponente in diesem Koordinatensystem zu verstehen.

Bei mehreren Stromkomponenten ist für jede dieser Stromkomponenten eine Regelstruktur gemäß der Figur 1 anwendbar. Insbesondere ist jedoch auf jeden Fall für die drehmomentbildende Stromkomponente als I_IST eine Reglerstruktur nach Figur 1 zu verwenden.

Der Sollwert I Soll und der Istwert I_IST werden dem Stromregler zugeführt, welcher die Stellgröße entsprechend der Regelabweichung verändert. Im vorliegenden Fall ist vorzugsweise die Spannung U, also der Betrag des Spannungsvektors der Versorgung des Motors M, die genannte Stellgröße.

Wichtig ist bei der Erfindung, dass die Sollwertvorgabe für den Regler SR mit zeitlicher Verzögerung dem Regler zugeführt wird. Dies ermöglicht, da zu dem neuen Zeitpunkt ja schon die neue Sollwertvorgabe bekannt ist, dass die Regelstruktur über eine Vorsteuerung V zeitlich synchron zur neuen Sollwertvorgabe die Ausgangsgröße des Reglers SR beeinflusst in der gewünschten Weise. Dies bewirkt dann gemäß der physikalischen Gesetze der Regelstrecke, umfassend den Motor M, eine Änderung des erfassten Stromkomponenten-Istwertes I_IST, die dem Regler SR als Istwert zugeführt wird. Betrachtet man also die zeitdiskrete Reglerstruktur, ist klar festzustellen, dass der Istwert und die Sollwertvorgabe des Regler SR dem gleichen Zeitraster, also Zeitschritt angehören.

Besonders vorteilhaft ist bei der Erfindung, dass die Regelstrecke in ungefährer Näherung als Integrierglied angesehen werden kann, weil der Motor als wichtige Eigenschaft auf jeden Fall eine Induktivität aufweist. Nach Figur 1 wird der Vorsteuerung V die Differenz aus der zeitlich verzögerten und zeitlich unverzögerten Sollwertvorgabe zugeführt, also die Änderung der Sollwertvorgabe. Wenn also der Proportionalitätsfaktor Kv richtig eingestellt ist, wird somit das integrierende Verhalten der Regelstrecke direkt nachgebildet. Der Regler SR muss dann nur noch kleine Abweichungen und Störgrößen ausregeln.

Verallgemeinert gesprochen weist die erfindungsgemäße Regelstruktur also einen Regler auf, dessen Sollwertvorgabe zeitlich verzögert wirksam wird, wobei dem Regler eine Dead-Beat-Vorsteuerung parallel geschaltet ist, die zeitlich ohne Verzögerung wirksam ist.

Wichtig ist bei der Erfindung auch, dass die Stellgröße U einer Stellgrenze unterliegt, da im den Motor versorgenden Umrichter keine beliebig hohen Spannungen herstellbar sind. Trotzdem ist ein Überschwingen des Stromwertes bei der Erfindung vermeidbar und somit auch ein Erreichen der Stromgrenze und der damit verbundenen Notabschaltungen und Fehlermeldungen.

Der eigentliche Regler SR bekommt nur die verzögerte Sollwertvorgabe übermittelt und vergleicht diese mit der schon mindestens einen Zeitschritt neueren Istwert-Größe.

Wichtig ist bei der Erfindung, dass der vorgegebene Sollwert I_Soll verarbeitet wird und erst das Ergebnis dieser Bearbeitung an den Regler zugeführt wird. Hierbei wird ein Sollwertbegrenzer SB verwendet.

Dieser Sollwertbegrenzer SB verhindert, dass die Stellgrenze der Stellgröße überschritten wird. Dabei wird der Sollwert derart begrenzt, dass die Spannungsstellgrenze SG nicht überschritten wird, wobei dies derart geschieht, dass keine anderen Nachteile, wie Instabilitäten des Regelkreises durch zusätzliche Rückkopplungen, entstehen.

Dabei verwendet der Sollwertbegrenzer SB als Eingangsgrößen die Ausgangsgröße U des Reglers, den nichtverzögerten eigentlichen Sollwert I_Soll und den zeitlich verzögerten, also zeitlich früheren Sollwert I_SollZ1.

Dabei wirkt der Sollwertbegrenzer derart, dass die Begrenzung auf den Sollwert nur dann wirkt, wenn die Ausgangsgröße, also der begrenzte Sollwert I_Soll, in Richtung des unbegrenzten Sollwertes läuft. Die Ausgangsgröße des Sollwertbegrenzers SB ist mit I_SollLim bezeichnet

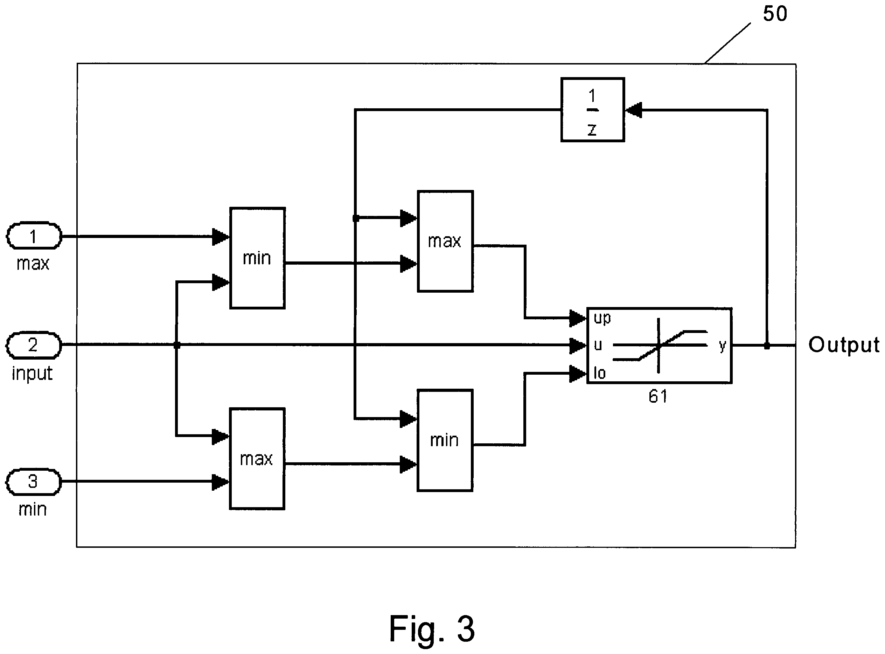

Ein detailliertes Ausführungsbeispiel des Sollwertbegrenzers zeigt Figur 2, wobei in Figur 3 ein Ausführungsbeispiel des Begrenzers 50 gezeigt ist.

Figur 2 zeigt, dass die Differenz zwischen der Stellgröße U und den Stellgrenzen U_max und U_min des Umrichters bestimmt wird, mit einem Faktor 1/K multipliziert wird und auf den zeitlich verzögerten, also zeitlich früheren Sollwert I_SollZ1, aufsummiert wird. Das Ergebnis wird als maximaler beziehungsweise minimaler Wert (max, min) einem Begrenzer 50 zugeführt. Außerdem wird dem Begrenzer 50 auch der zeitlich nicht-verzögerte Sollwert I Soll als Eingangsgröße input zugeführt.

Figur 2 berücksichtigt also den Zusammenhang

$$i_{soll\,max,n} = i_{soll,n-1} + \frac{1}{K_v} \cdot \left( U_{max} - u_{r,n} \right),$$

wobei n die Zeitschritte nummeriert, ($U_{max}$) die Spannungsstellgrenze ist, ($u_{r,n}$) der Wert der Reglerausgangsgröße U ist, K den gleichen Wert hat wie bei der Vorsteuerung V. Für die untere Begrenzung gilt ein analoger Zusammenhang.

Der Begrenzer 50 ist in Figur 3 näher ausgeführt.

Es wird der kleinere Wert aus input und max bestimmt. Dann wird der größere Wert aus diesem und dem zeitlich verzögerten Ausgangswert des Begrenzers 50 bestimmt. Dieser Wert wird dann als oberer Begrenzungswert wirksam.

Ebenso wird der größere Wert aus input und min bestimmt. Dann wird der kleinere Wert aus diesem und dem zeitlich verzögerten Ausgangswert des Begrenzers 50 bestimmt. Dieser Wert wird dann als unterer Begrenzungswert wirksam.

Dabei wird in dem Begrenzerglied 61 der input auf den oberen und unteren Begrenzungswert wirksam.

Als Begrenzer 50 in Figur 2 ist auch ein bekanntes übliches Begrenzerglied verwendbar, das den input auf die Extremwerte max und min begrenzt. Jedoch kann in diesem Fall unter Umständen ein Schwingverhalten der Regelstruktur durch inhärente Rückkopplungen auftreten. Daher ist es vorteilhaft, den Begrenzer 50 nach Figur 3 auszuführen. Es sind jedoch auch andere schwingungsunterdrückende Maßnahmen ausführbar.

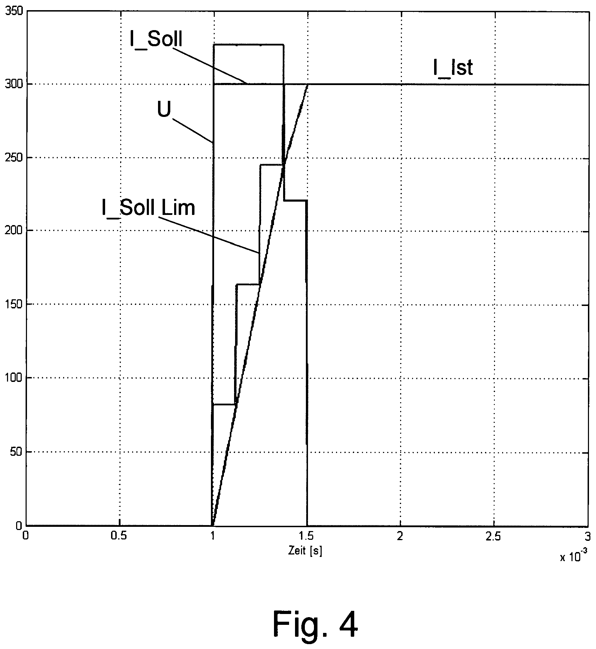

In Figur 4 ist ein beispielhafter Verlauf der Werte der Größen gezeigt, wobei die Sollwertbegrenzung bei einem Sprung der Führungsgröße wirksam wird. Der begrenzte Sollwert verläuft genau so, dass der Istwert diesen nach einem Abtastraster erreicht. Dadurch bleibt die Regelabweichung des Regler SR während der gesamten Nachführung null und der Integrierer des Reglers SR verändert seinen Wert nicht. Damit wird das Überschwingen des Istwerts verhindert.

Bei einem bevorzugten erfindungsgemäßen Ausführungsbeispiel wird die zeitliche Verzögerung als genau ein Zeitschritt, also ein Zeitraster, der zeitdiskreten Regelstruktur ausgeführt.

Der Regler ist vorzugsweise als zeitdiskreter Dead-Beat-Regler ausführbar. Dabei ist der Regler derart ausgeführt, dass er schon in einem Zeitschritt die Regelabweichung ausregeln kann. Dies gelingt zumindest dann, wenn der Regler eine Übertragungsfunktion der Z-Transformierten Form $1/(z*G(z))$ aufweist, wobei G die Übertragungsfunktion der Regelstrecke ist.

## Bezugszeichenliste

I Soll Sollwert
I_Ist Istwert
I_SollLim Ausgangsgröße des Sollwertbegrenzers SB
U Spannung als Stellgröße
SR Stromregler
SA Stromabtastung
V Vorsteuerung
R Regler
M Motor
SG Spannungsstellgrenze
SB Sollwertbegrenzer

50 Begrenzer
61 Begrenzerglied

## Patentansprüche

1. Antrieb, umfassend einen Elektromotor, der von einem Umrichter gespeist ist,
   wobei der Umrichter eine zeitdiskrete Regelstruktur umfasst, die den Statorstrom des Elektromotors mittels Stellen der am Motor anliegenden Spannung regelt,
   wobei der Strom des Motors zeitdiskret erfasst wird,
   wobei die Regelstruktur einen Regler umfasst, dessen Istwert eine erste Stromkomponente des Stromes ist,
   wobei der Sollwertvorgabe des Reglers zumindest ein Sollwertbegrenzer vorgeschaltet ist,
   **dadurch gekennzeichnet, dass**
   die Differenz zwischen der Stellgröße U und den Stellgrenzen U_max und U_min des Umrichters bestimmt wird, mit einem Faktor 1/K multipliziert wird und auf den zeitlich verzögerten, also zeitlich früheren Sollwert I_SollZ1, aufsummiert wird, wobei diese Summe als maximaler beziehungsweise minimaler Wert (max, min) einem Begrenzer (50) zugeführt wird als auf den zeitlich nicht-verzögerten Sollwert I_Soll wirksam werdenden Begrenzungswert.

**2.** Antrieb nach **Anspruch 1,**
**dadurch gekennzeichnet, dass**
zwischen der Sollwertvorgabe des Reglers und dem Ausgangswert der Sollwertbegrenzung ein zeitliches Verzögerungsglied angeordnet ist, insbesondere zur Verzögerung um einen einzigen Zeitschritt.

**3.** Antrieb nach mindestens einem der vorangegangenen Ansprüche,
**dadurch gekennzeichnet, dass**
dem Regler eine Vorsteuerung zugeordnet ist, die dem Ausgangswert des Regler eine zur zeitlichen Änderung der Sollwertvorgabe proportionale Größe aufaddiert.

**4.** Antrieb nach mindestens einem der vorangegangenen Ansprüche,
**dadurch gekennzeichnet, dass**
die Sollwertbegrenzung als Eingangsgröße zumindest den nicht-verzögerten Sollwert, den zeitlich verzögerten Sollwert und den Ausgangswert des Reglers benötigt.

**5.** Antrieb nach mindestens einem der vorangegangenen Ansprüche,
**dadurch gekennzeichnet, dass**
der Regler ein Dead-Beat-Regler ist, insbesondere ein auf den in der Regelstrecke angeordneten Motor angepassten.

**6.** Antrieb nach mindestens einem der vorangegangenen Ansprüche,
**dadurch gekennzeichnet, dass**
der Regler ein linearer Regler, wie P-Regler, ein PI-Regler oder ein PID-Regler, ist, insbesondere mit Vorsteuerung.

**7.** Antrieb nach mindestens einem der vorangegangenen Ansprüche,
**dadurch gekennzeichnet, dass**
aus dem erfassten Strom die Stromkomponenten in einem Koordinatensystem bestimmt werden.

**8.** Antrieb nach mindestens einem der vorangegangenen Ansprüche,
**dadurch gekennzeichnet, dass**
der Umrichter für jede Stromkomponente eine Regelstruktur umfasst, die der Regelstruktur für die erste Stromkomponente gleicht.

**9.** Antrieb nach mindestens einem der vorangegangenen Ansprüche,
**dadurch gekennzeichnet, dass**
die Vorsteuerung als Dead-Beat-Steuerung ausgeführt ist, also das zum in der Regelstrecke angeordneten Motor ein inverses Verhalten aufweist, insbesondere wobei die Stellgrenze des Umrichters dabei nicht berücksichtigt wird.

**10.** Antrieb nach mindestens einem der vorangegangenen Ansprüche,
**dadurch gekennzeichnet, dass**
der Sollwertbegrenzer SB den Sollwert derart begrenzt, dass die Spannungsstellgrenze nicht überschritten wird, insbesondere wobei dies derart geschieht, dass keine anderen Nachteile, wie Instabilitäten des Regelkreises durch zusätzliche Rückkopplungen, entstehen,
und/oder dass
der Sollwertbegrenzer derart vorgesehen ist, dass die Begrenzung auf den Sollwert nur dann wirkt, wenn die Ausgangsgröße, also der begrenzte Sollwert I_Soll, in Richtung des unbegrenzten Sollwertes läuft.

**11.** Antrieb nach mindestens einem der vorangegangenen Ansprüche,
**dadurch gekennzeichnet, dass**
der Begrenzer (**50**) ein Verzögerungsglied umfasst, das seinen Ausgangswert um mindestens einen Zeitschritt, also ein Zeitraster, verzögert und zur Größenbestimmung innerhalb des Begrenzers (**50**) verwendet.

**12.** Antrieb nach mindestens einem der vorangegangenen Ansprüche,
**dadurch gekennzeichnet, dass**
der Begrenzer (**50**) Mittel zur Unterdrückung von Rückkopplungen umfasst.

**13.** Antrieb nach mindestens einem der vorangegangenen Ansprüche,
**dadurch gekennzeichnet, dass**

der Begrenzer (**50**) als Eingangswerte den maximalen und minimalen Wert (max, min) sowie den zeitlich nicht-verzögerten Sollwert I_Soll aufweist,

wobei der kleinere Wert aus max und input bestimmt wird, dieser verglichen wird mit dem zeitlich verzögerten Ausgangswert des Begrenzers (**50**) und davon der größere Wert als obere Grenze des auf den input wirkenden Begrenzergliedes (61) wirksam wird,

wobei der größere Wert aus min und input bestimmt wird, dieser verglichen wird mit dem zeitlich verzögerten Ausgangswert des Begrenzers (**50**) und davon der kleinere Wert als untere Grenze des auf den input wirkenden Begrenzergliedes (61) wirksam wird.

**14.** Antrieb nach mindestens einem der vorangegangenen Ansprüche,
**dadurch gekennzeichnet, dass**

die obere Grenze des Begrenzers (**50**) $i_{soll\max,n} = i_{soll,n-1} + \dfrac{1}{K_v} \cdot \left( U_{\max} - u_{r,n} \right)$ beträgt,

wobei n die Zeitschritte nummeriert, ($U_{\max}$) die Spannungsstellgrenze ist, ($u_{r,n}$) der Wert der Reglerausgangsgröße U ist, K den gleichen Wert hat wie bei der Vorsteuerung V.

**15.** Verfahren zur Regelung des Motorstromes bei einem von einem Umrichter gespeisten Elektromotor,
wobei das Verfahren zeitdiskret ausgeführt wird und der Statorstrom des Motors zeitdiskret erfasst wird,
wobei der Statorstrom des Elektromotors geregelt wird,
**wobei** der Istwert einer ersten Stromkomponente des Stromes auf eine Sollwertvorgabe hin geregelt wird,
wobei die Sollwertvorgabe Ausgang eines Sollwertbegrenzers ist,
wobei die Stellgröße des Reglers die am Motor anliegenden Spannung ist,
**dadurch gekennzeichnet, dass**
die Differenz zwischen der Stellgröße U und den Stellgrenzen U_max und U_min des Umrichters bestimmt wird, mit einem Faktor 1/K multipliziert wird und auf den zeitlich verzögerten, also zeitlich früheren Sollwert I_SollZ1, aufsummiert wird, wobei diese Summe als maximaler beziehungsweise minimaler Wert (max, min) einem Begrenzer (**50**) zugeführt wird als auf den zeitlich nicht-verzögerten Sollwert I_Soll wirksam werdenden Begrenzungswert.

**Claims**

**1.** Drive, including an electric motor, which is supplied by a converter,
the converter including a time-discrete closed-loop control structure which regulates the stator current of the electric motor by setting the voltage applied at the motor,
the current of the motor being acquired in time-discrete fashion,
the closed-loop control structure including a closed-loop controller having an actual value as a first current component of the current,
the setpoint input of the closed-loop controller being coupled with at least one upstream setpoint limiter,
**characterised in that**
the difference between the actuating variable U and the actuating limits U_max and U_min of the converter is determined, multiplied by a factor 1/K, and added to the time-delayed, i.e. earlier, setpoint I_setpointZ1, this sum being forwarded as a maximum or a minimum value (max, min) to a limiter (50) as a limit value that acts on the non-delayed I_setpoint.

**2.** Drive according to claim 1,
**characterised in that**
a time-delay element is arranged between the setpoint input of the closed-loop controller and the output value of the setpoint limiter, in particular for delay by a single time step.

**3.** Drive according to at least one of the preceding claims,
**characterised in that**
the closed-loop controller is assigned a pilot control which adds to the output value of the closed-loop controller a variable that is proportional to the time change of the setpoint input.

**4.** Drive according to at least one of the preceding claims,

**characterised in that**
the setpoint limiter requires as input variable at least the non-delayed setpoint, the time-delayed setpoint and the output value of the closed-loop controller.

5.   Drive according to at least one of the preceding claims,
     **characterised in that**
     the closed-loop controller is a dead beat controller, in particular one that is adapted to the motor disposed in the controlled system.

6.   Drive according to at least one of the preceding claims,
     **characterised in that**
     the closed-loop controller is a linear controller, such as a P-controller, a PI-controller or a PID-controller, in particular with pilot control.

7.   Drive according to at least one of the preceding claims, **characterised in that**
     the current components are determined in a coordinate system from the acquired current.

8.   Drive according to at least one of the preceding claims,
     **characterised in that**
     the converter includes for each current component a closed-loop control structure, which is similar to the closed-loop control structure for the first current component.

9.   Drive according to at least one of the preceding claims, **characterised in that**
     the pilot control is implemented in the form of a dead beat control, that is to say, it has an inverse behaviour with respect to the motor disposed in the controlled system, the actuating limit of the converter, in particular, not being taken into account in this context.

10.  Drive according to at least one of the preceding claims,
     **characterised in that**
     the setpoint limiter SB limits the setpoint such that the voltage actuating limit is not exceeded, this being carried out in particular such that no other disadvantages arise, such as instabilities of the closed-loop control circuit as a result of additional feedback,
     and/or **in that**
     the setpoint limiter is provided such that the restriction to the setpoint is effective only if the output variable, i.e., limited setpoint I_setpoint, runs in the direction of the unlimited setpoint.

11.  Drive according to at least one of the preceding claims,
     **characterised in that**
     the limiter (50) includes a delay element, which delays its output value by at least one time step, i.e., one time raster, and uses it for variable determination within the limiter (50).

12.  Drive according to at least one of the preceding claims,
     **characterised in that**
     the limiter (50) includes means for suppressing feedback.

13.  Drive according to at least one of the preceding claims,
     **characterised in that**
     the limiter (50) has as input values the maximum and minimum values (max, min) as well as the non-delayed setpoint I_setpoint,
     the smaller value being determined from max and input, compared to the delayed output value of the limiter (50), and the larger value thereof becoming effective as upper limit of the limit element (61) acting on the input,
     the larger value being determined from min and input, compared to the delayed output value of the limiter (50), and the smaller value thereof becoming effective as lower limit of the limit element (61) acting on the input.

14.  Drive according to at least one of the preceding claims,
     **characterised in that**

the upper limit of the limiter (50) amounts to $i_{setpoint\ max,n} = i_{setpoint,n-1} + \frac{1}{K_v} \cdot (U_{max} - u_{r,n})$, n numbering the time steps ($U_{max}$) being the voltage actuating limit, ($u_{r,n}$) being the value of the output variable U of the closed-loop controller, K having the same value as in the pilot control V.

15. Method for regulating the motor current in an electric motor supplied by a converter,
the method being implemented in time-discrete fashion and the stator current of the motor being acquired in time-discrete fashion,
the stator current of the electric motor being regulated,
the actual value of a first current component of the current being regulated towards a setpoint input,
the setpoint input being an output of a setpoint limiter,
the actuating variable of the closed-loop controller being the voltage applied at the motor,
**characterised in that**
the difference between the actuating variable U and the actuating limits U_max and U_min of the converter is determined, multiplied by a factor 1/K, and added to the time-delayed, i.e. earlier, setpoint I_setpointZ1, this sum being forwarded as a maximum or a minimum value (max, min) to a limiter (50) as a limit value that acts on the non-delayed I_setpoint.

## Revendications

1. Entraînement, comprenant un moteur électrique qui est alimenté par un convertisseur,
sachant que le convertisseur comprend une structure de régulation discrète dans le temps, qui régule le courant de stator du moteur électrique par réglage de la tension appliquée au moteur,
sachant que le courant du moteur est détecté de façon discrète dans le temps,
sachant que la structure de régulation comprend un régulateur dont la valeur réelle est une première composante du courant,
sachant qu'au moins un limiteur de valeur de consigne intervient en amont de l'allocation de valeur de consigne du régulateur,
**caractérisé en ce qu'**on détermine la différence entre la grandeur réglante U et les limites de réglage U_max et U_min du convertisseur, on la multiplie par un facteur 1/K et on l'additionne à la valeur de consigne temporellement retardée I_SollZ1, donc antérieure dans le temps, sachant que cette somme est apportée sous forme de valeur maximale ou respectivement minimale (max, min) à un limiteur (50) en tant que valeur limite devenant active sur la valeur de consigne temporellement non retardée I_Soll.

2. Entraînement selon la revendication 1, **caractérisé en ce qu'**un élément retardateur, en particulier pour un retard d'un seul incrément de temps, est disposé entre l'allocation de valeur de consigne du régulateur et la valeur de sortie de la limitation de la valeur de consigne.

3. Entraînement selon au moins une des revendications précédentes,
**caractérisé en ce qu'**une commande pilote est associée au régulateur, laquelle additionne à la valeur de sortie du régulateur une grandeur proportionnelle à la modification temporelle de l'allocation de valeur de consigne.

4. Entraînement selon au moins une des revendications précédentes,
**caractérisé en ce que** la limitation de la valeur de consigne est nécessaire comme grandeur d'entrée au moins à la valeur de consigne temporellement non retardée, à la valeur de consigne temporellement retardée et à la valeur de sortie du régulateur.

5. Entraînement selon au moins une des revendications précédentes,
**caractérisé en ce que** le régulateur est un régulateur « dead beat », en particulier adapté au moteur disposé dans le système réglé.

6. Entraînement selon au moins une des revendications précédentes,
**caractérisé en ce que** le régulateur est un régulateur linéaire, tel qu'un régulateur proportionnel (P), un régulateur proportionnel et par intégration (PI) ou un régulateur proportionnel, par intégration et par différentiation (PID), en particulier avec commande pilote.

**7.** Entraînement selon au moins une des revendications précédentes,
**caractérisé en ce qu'**à partir du courant détecté, on détermine les composantes du courant dans un système de coordonnées.

**8.** Entraînement selon au moins une des revendications précédentes,
**caractérisé en ce que** le convertisseur comprend pour chaque composante du courant une structure de régulation qui est semblable à la structure de régulation pour la première composante du courant.

**9.** Entraînement selon au moins une des revendications précédentes,
**caractérisé en ce que** la commande pilote est réalisée sous forme de commande « dead beat », donc qui présente un comportement inverse au moteur disposé dans le système réglé, sachant en particulier que la limite de réglage du convertisseur n'est pas ici prise en compte.

**10.** Entraînement selon au moins une des revendications précédentes,
**caractérisé en ce que** le limiteur de valeur de consigne SB limite la valeur de consigne de telle sorte que la limite de réglage de tension n'est pas dépassée, sachant en particulier que cela s'effectue de façon à ne pas créer d'autres inconvénients, comme des instabilités du circuit de régulation dues à des rétroactions supplémentaires, et/ou **en ce que** le limiteur de valeur de consigne est prévu de telle sorte que la limitation n'agit sur la valeur de consigne que si la grandeur de sortie, donc la valeur de consigne limitée I_Soll, évolue en direction de la valeur de consigne non limitée.

**11.** Entraînement selon au moins une des revendications précédentes,
**caractérisé en ce que** le limiteur (50) comprend un élément retardateur qui retarde sa valeur de sortie d'au moins un incrément de temps, donc d'une tranche de temps, et l'utilise pour déterminer la grandeur à l'intérieur du limiteur (50).

**12.** Entraînement selon au moins une des revendications précédentes,
**caractérisé en ce que** le limiteur (50) comprend des moyens pour supprimer les rétroactions.

**13.** Entraînement selon au moins une des revendications précédentes,
**caractérisé en ce que** le limiteur (50) présente comme valeurs d'entrée les valeurs maximale et minimale (max, min) ainsi que la valeur de consigne temporellement non retardée I_Soll,
sachant qu'on détermine la plus petite valeur entre max et input et on la compare à la valeur de sortie temporellement retardée du limiteur (50), et la plus grande valeur de cette comparaison devient active comme limite supérieure de l'élément retardateur (61) agissant sur l'input,
sachant qu'on détermine la plus grande valeur entre min et input et on la compare à la valeur de sortie temporellement retardée du limiteur (50), et la plus petite valeur de cette comparaison devient active comme limite inférieure de l'élément retardateur (61) agissant sur l'input.

**14.** Entraînement selon au moins une des revendications précédentes,
**caractérisé en ce que** la limite supérieure du limiteur (50) est égale à

$$i_{soll\,max,\,n} = i_{soll,\,n\text{-}1} + (1/K_v).\,(U_{max} \text{-} u_{r,\,n}),$$

sachant que n numérote les incréments de temps, ($U_{max}$) est la limite de réglage de tension, ($u_{r,n}$) est la valeur de la grandeur de sortie U du régulateur et K a la même valeur que pour la commande pilote V.

**15.** Procédé de régulation du courant de moteur pour un moteur électrique alimenté par un convertisseur,
sachant qu'on exécute le procédé de façon discrète dans le temps et on détecte le courant de stator du moteur de façon discrète dans le temps,
sachant qu'on régule le courant de stator du moteur électrique,
sachant qu'on régule la valeur réelle d'une première composante du courant sur une allocation de valeur de consigne,
sachant que l'allocation de valeur de consigne est la sortie d'un limiteur de valeur de consigne,
sachant que la grandeur réglante du régulateur est la tension appliquée au moteur,
**caractérisé en ce qu'**on détermine la différence entre la grandeur réglante U et les limites de réglage U_max et U_min du convertisseur, on la multiplie par un facteur 1/K et on l'additionne à la valeur de consigne temporellement retardée I_SollZ1, donc antérieure dans le temps, sachant que cette somme est apportée sous forme de valeur maximale ou respectivement minimale (max, min) à un limiteur (50) en tant que valeur limite devenant active sur la valeur de consigne temporellement non retardée I_Soll,

Fig. 1

Fig. 2

Fig. 3

EP 2 050 187 B1

Fig. 4

**IN DER BESCHREIBUNG AUFGEFÜHRTE DOKUMENTE**

**In der Beschreibung aufgeführte Patentdokumente**

- EP 0179356 A
- DE 1941312
- DE 19532477 A1
- DE 199752 C1
- WO 2005018086 A
- US 6359416 B1
- US 2004001291 A1

**In der Beschreibung aufgeführte Nicht-Patentliteratur**

- **NESHEVA D et al.** BIAS _ENHANCED CONDUCTANCE IN HYDROGENATED AMORPHOUS SILICON FILMS. *Philosophical Magazine B,* 01. Mai 1991, vol. 63 (5), ISSN 0141-8637, 1139-1148